(19)

Europäisches
Patentamt
European
Patent Office
Office européen
des brevets

(11) **EP 2 164 718 B1**

(12) **EUROPEAN PATENT SPECIFICATION**

(45) Date of publication and mention
of the grant of the patent:
**22.08.2012 Bulletin 2012/34**

(51) Int Cl.:
***B60G 21/073*** (2006.01)

(21) Application number: **08757052.9**

(22) Date of filing: **26.05.2008**

(86) International application number:
**PCT/BE2008/000043**

(87) International publication number:
**WO 2008/144855 (04.12.2008 Gazette 2008/49)**

(54) **DEVICE TO IMPROVE THE ROLLING STABILITY OF A VEHICLE**

VORRICHTUNG ZUR VERBESSERUNG DER ROLLSTABILITÄT EINES FAHRZEUGS

DISPOSITIF POUR AMELIORER LA STABILITE DE ROULEMENT D'UN VEHICULE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.05.2007 BE 200700271**

(43) Date of publication of application:
**24.03.2010 Bulletin 2010/12**

(73) Proprietor: **TG Consulting, Besloten
Vennootschap met Beperkte
Aansprakelijkheid
3960 Bree (BE)**

(72) Inventor: **GEUSENS, Barbara
B-3960 Bree (BE)**

(74) Representative: **Donné, Eddy
Bureau M.F.J. Bockstael nv
Arenbergstraat 13
2000 Antwerpen (BE)**

(56) References cited:
**EP-A- 0 893 321       DE-A1- 4 115 717
DE-A1- 19 853 876     FR-A- 1 173 715
FR-A- 1 256 864       FR-A- 1 574 856
GB-A- 2 056 383       GB-A- 2 251 593
JP-A- 53 031 070      US-A- 3 328 019
US-A- 3 563 566       US-A- 3 871 635**

## Description

The present invention concerns a device to improve the rolling stability of a vehicle.

In particular, the present invention concerns a device to improve the rolling stability of a vehicle with a frame that is supported by at least one axle with wheels that are bearing-mounted on a bridge which is suspended in relation to the frame.

It is known that such vehicles and in particular vehicles whose centre of gravity is relatively high, such as buses and certain lorries, have rolling stability problems, especially when the vehicle has to take a sharp bend at a high speed, whereby the suspension strongly compresses on one side of the vehicle due to the centrifugal force, whereas it rather springs outwards on the other side, as a result of which the vehicle threatens to tilt and tip over.

The rolling stability is also at risk when the vehicle proceeds on a rough terrain, for example in a pit or at a construction site. The rolling stability may also suffer when the vehicle is riding with the wheels of one side on an asphalted road and with one or several wheels of the other side on a lower roadside, which is much softer than the road surface in many cases.

Devices to improve the rolling stability of vehicles are already known, for example in the shape of torsion bars provided between the above-mentioned bridge and the frame and which connect the wheels of an axle on one side of the vehicle to the wheels of the axle on the other side of the vehicle.

These torsion bars barely exert any force or no force at all when the wheels of the axle on which the torsion bars are mounted equally compress or spring outwards on either side.

However, if the wheels of the axle on one side of the vehicle compress more than the wheels of the axle on the other side of the vehicle, then these torsion bars will exert a certain counteracting force, in such a way that in case of an increasing inclination of the vehicle, the counteracting force will get larger and larger, which increasingly counteracts the tilting of the vehicle.

However, a disadvantage of these known devices for improving the rolling stability of a vehicle is that such torsion bars are very heavy, which is moreover detrimental to the loading capacity of the vehicle since the maximum weight per shaft is legally restricted to a certain value.

Another disadvantage is that such torsion bars are very liable to wear.

Yet another disadvantage of these known torsion bars is that there where the torsion bars should be suspended, there is usually only a limited space available.

As an alternative, hydraulic anti-roll devices with two double-acting cylinders of which the chambers are crosswise connected are widely known, see for example FR-A-1256864, GB-A-2056383 and DE-A-4115717.

Also other devices are known to improve the rolling stability of a vehicle, which mainly consist of a measuring device which measures for example the difference in angular velocity of the wheels on one side of the vehicle and on the other side of the vehicle, which difference predominantly occurs of course when the vehicle takes a bend, and it threatens to become extreme when the radially most inwardly situated wheels threaten to come off the road surface, and of a control device which, in case the above-mentioned difference in angular velocity becomes too large, activates the brakes of the vehicle to thus reduce the centrifugal force acting on the vehicle by reducing the speed at which the vehicle takes the bend, and to thus restrict the risk for the vehicle to tilt.

However, a disadvantage of these known devices for improving the rolling stability of a vehicle is that the drivers of vehicles that are equipped with such a device have the feeling that they lose control over the vehicle, since the vehicle is automatically slowed down by the vehicle without any intervention of the driver himself.

The present invention aims to remedy one or several of the above-mentioned and other disadvantages.

To this end, the present invention concerns a device to improve the rolling stability of a vehicle according to claim 1 with a frame which is supported by at least one axle with wheels that are bearing-mounted on a bridge which is suspended in relation to the frame, whereby the device consists of two double-action hydraulic cylinders which are provided between the frame and the above-mentioned bridge and which are each provided with a piston dividing the cylinder in an upper chamber and a lower chamber and a piston rod whose diameter is larger in the upper chamber than the diameter in the lower chamber, whereby a tube is provided on the one hand, connecting the upper chamber of the first cylinder to the lower chamber of the second cylinder, and a tube is provided on the other hand connecting the upper chamber of the second cylinder to the lower chamber of the first cylinder.

An advantage of the device according to the present invention is that the pressure difference occurring in the cylinders as a result of riding in a bend, or when the vehicle which is situated on a rough surface ends up slantingly, is automatically neutralised or counteracted without having to actively supply any energy, but merely thanks to the pressures available in the device itself.

Another advantage is that it may be entirely hydraulic and is entirely self-regulating, i.e. without any active intervention being required from the driver. As a consequence, the device remains relatively simple and cheap, and it can be made small and light, and the fact that there are less mobile parts has a positive influence on its lifetime and maintenance.

Another advantage of a device according to the invention is that the driver of a vehicle which is equipped with such a device is not hindered in any way by the operation of the device while driving.

In order to better explain the characteristics of the invention, the following preferred embodiments of a device according to the invention to improve the rolling stability of a vehicle are described as an example only without being limitative in any way, with reference to the accompanying drawings, in which:

figure 1 schematically represents a device according to the invention;
figure 2 shows an enlargement of figure 1 according to F2;
figure 3 shows a device coupled to a suspension;
figure 4 shows a vehicle taking a bend;
figure 5 shows a cross section of figure 4 according to line IV-IV;
figures 6 to 8 represent the device with different rolling instabilities;
figures 9 and 10 represent the device when both wheels compress and spring outwards respectively.

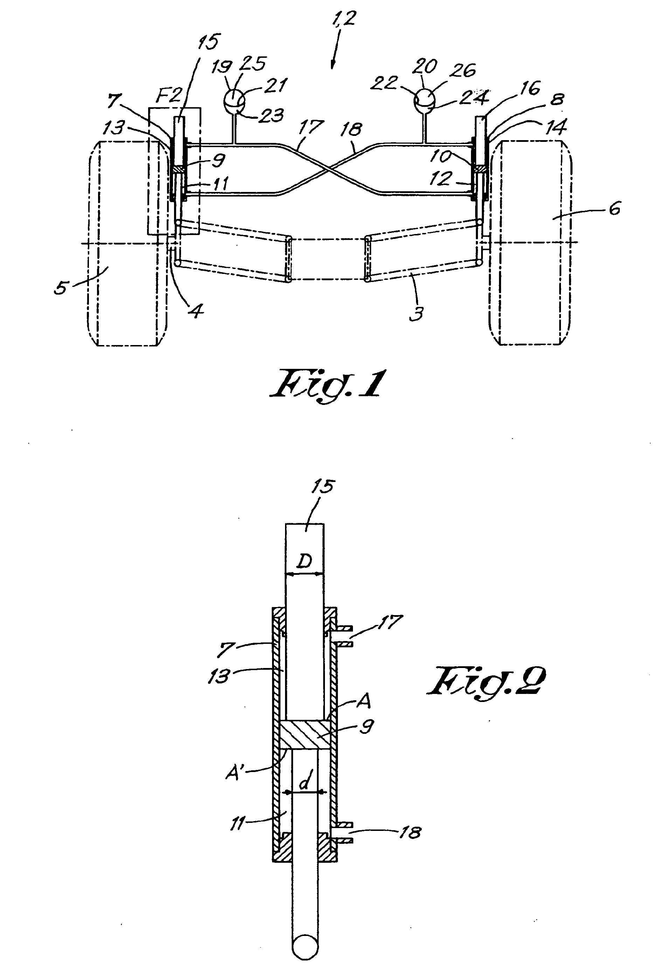

Figure 1 shows a device 1 according to the invention to improve the rolling stability of a vehicle 2. The device is provided on a bridge 3 connected to an axle 4 with wheels 5 and 6 of the vehicle 2 and it consists of two double-action hydraulic cylinders 7 and 8.

The cylinders 7 and 8 are each provided with a piston 9 and 10 which divides the cylinder 7, 8 respectively in a lower chamber 11, 12 respectively and an upper chamber 13, 14 respectively. The piston 9, 10 respectively is connected to the bridge 3 by means of a piston rod 15, 16 respectively, whose diameter D in the upper chamber 13, 14 respectively differs from the diameter d in the lower chamber 11, 12 respectively. Pipes 17, 18 respectively connect the upper chambers 13, 14 respectively of one cylinder 7, 8 respectively to the lower chamber 12, 11 respectively of the other cylinder 8, 7 respectively.

Onto both connecting tubes 17, 18 respectively has also been provided an oil accumulator 19, 20 respectively in the form of an expansion tank which is divided in two volumes 23 to 26 by means of a membrane 21, 22 respectively, the volumes 23 and 24 of which are connected to the pipes 17, 18 respectively, and which are filled with oil or another viscous fluid, and the volumes 25 and 26 of which are filled with a gas under pressure.

The enlargement in figure 2 of the cylinder 7 shows that the piston 9 (and 10) has a surface A' in the lower chamber which is larger than the surface A in the upper chamber 13, as the piston rod 15 with its larger diameter D occupies more space in the upper chamber 13 than in the lower chamber 11.

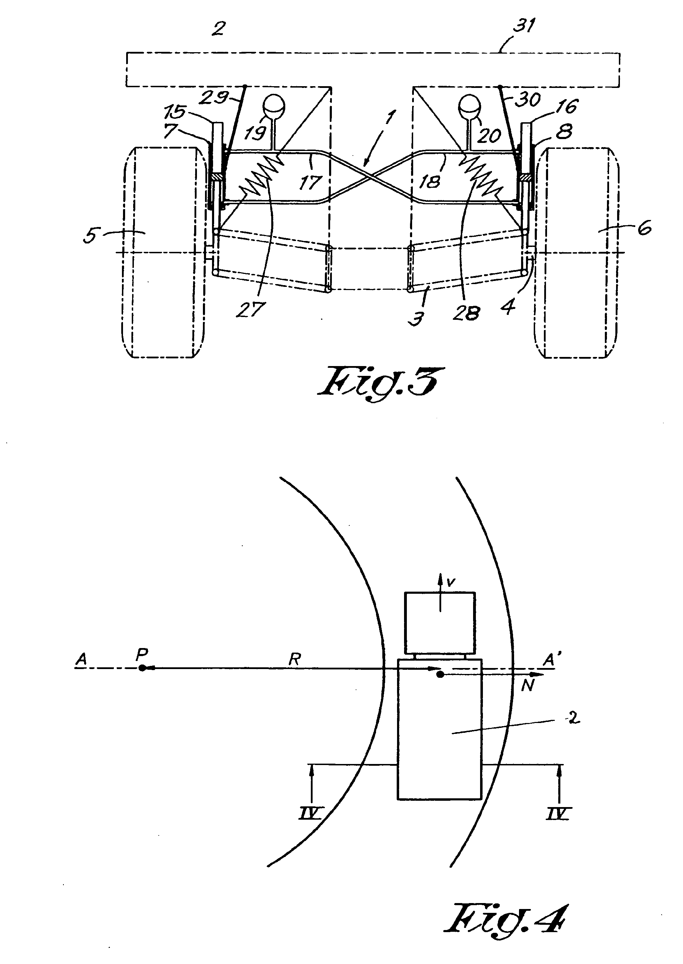

Figure 3 schematically shows, apart from the piston rods 15 and 16, a conventional spring system 27 and 28 forming the suspension system of the vehicle 2.

Figure 3 also shows that the cylinders 7 and 8 are connected to the frame 31 of the vehicle 2 by means of rods 29 and 30. As a consequence, the upper ends of the piston rods 15 and 16 are free.

The working of a device 1 according to the invention is simple and as follows.

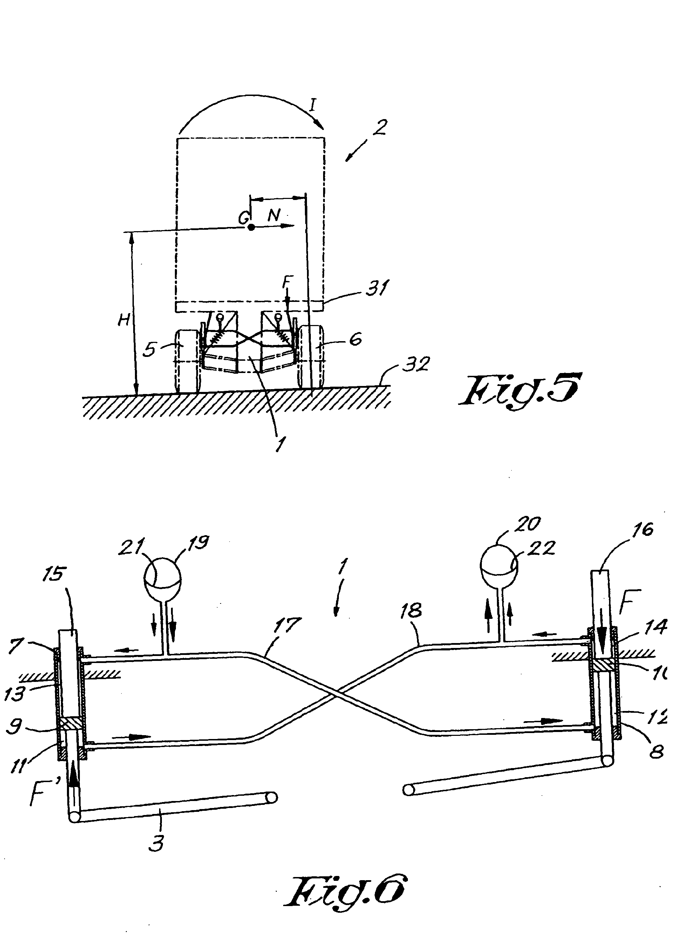

The phenomena which occur while taking a corner and which may lead to rolling instability are illustrated briefly hereafter by means of figures 4 and 5.

It is generally known that when a vehicle 2 takes a bend with a curvature radius R, as represented in figure 4, a centrifugal force N will be exerted which is directed outward according to the radial direction AA'.

The magnitude of this centrifugal force N is in proportion to the mass M of the vehicle 2, the squared velocity V of the vehicle and it is inversely proportional to the curvature radius R of the bend.

The centrifugal force N also exerts a clockwise moment I on the vehicle 2, as a result of which the vehicle 2 will threaten to tilt, which in other words jeopardizes the rolling stability of the vehicle 2. The danger increases as the centre of gravity G of the vehicle is situated higher, since the moment I equals the product of N and H, whereby H is the height of the centre of gravity G in relation to the road surface 32.

It is clear that, because of the moment I, the suspension on the side of the radially most outwardly situated wheels 6 will be increasingly compressed as the moment I is translated in a downwardly directed force F on the bridge and consequently also on the outermost cylinder 8 of the device 1. Analogously, the vehicle 2 springs outwards on the inner side of the bend because of the moment I. The compression and outwards springing results in pressure differences between the hydraulic cylinders 7 and 8.

The invention consists in stabilising this uneven outward spring and spring sag on both sides of the vehicle 2 by counteracting the above-mentioned pressure differences in the pair of hydraulic cylinders 7 and 8 of the device 1 which are provided between the bridge 3 and the frame 31 of the vehicle 2.

Apart from that, the device 1 also makes it possible for the wheels 5 and 6 to compress and spring out independently from one another, either or not evenly, in other situations, for example as a result of an irregularity in the road surface 32, whereby this motion is dampened, however.

Specific for this arrangement is that the hydraulic double-action cylinders 7 and 8 have the above-mentioned continuous piston rods 15, 16 respectively, which have a larger diameter D in the upper chamber 13, 14 respectively, than the diameter d in the lower chamber 11, 12 respectively.

As a consequence, the active pressure surface A of the pistons 9, 10 respectively in the upper chamber 13, 14 respectively is smaller than the active pressure surface A' of the pistons 9, 10 respectively in the lower chamber 11, 12 respectively, and at a certain pressure in the oil pipes 17, 18 respectively, the forces exerted on the pistons 9 and 10 at the lower chambers 11 and 12 will be larger than the forces at the upper chambers 13, 14 respectively.

Figure 6 shows the situation of the device 1 when a vehicle 2 takes a bend as represented in figures 4 and 5. Due to the rolling movement of the vehicle 2, the piston rod 16 will shift to the front in relation to the cylinder 8, as a result of which the pressure no longer stays equal but will be higher in the upper chamber 14 than in the lower chamber 12. As a consequence, the pressure p in the upper chamber 14 exerts a downward counterforce on the piston which is equal to p.A, whereby A is the piston surface in the upper chamber 14.

As the upper chamber 14 is connected to the lower chamber 11 of the cylinder 7 via the pipe 18, the pressure in both chambers will be equal, as a result of which an upward force F' is exerted on the piston 9. This force F' is larger than F since:

$$F' = p.A' = F.A'/A$$

whereby A' is the piston surface in the lower chamber 11, which is larger than A since the diameter d of the piston rod 15 or 16 is smaller in the lower chamber 11, 12 respectively than the diameter D in the upper chamber 13, 14 respectively.

This force F' will thus be able to push the piston 9 of the left cylinder 7 up, against the spring force, such that any rolling instability is opposed.

Hence, a double result is obtained with the device 1 according to the present invention. On the one hand, the rolling angle is restricted by the almost simultaneous compression of the side which would normally spring outwards due to the centrifugal force. On the other hand, as a result of the compression of both sides, the centre of gravity G of the vehicle 2 will be lowered, which results in an increased rolling stability.

Figure 6 also shows that, as a result of the larger force F', oil is pressed from the upper chamber 14 which is collected by the accumulator 20.

By way of example one could say that, by appropriately selecting the volume of the accumulators 19 and 20, the vehicle 2 is allowed a compression of 50 mm to the right and an outward spring of 50 mm to the left. For a vehicle 2 having a width of 2.5 meter, this corresponds to a rolling angle of about 3.5°.

When the rolling motion starts, the piston 10 in the right cylinder 8 presses the oil to the accumulator 20, while the oil from the lower chamber 11 of the left cylinder 7 also partly flows to the accumulator 20. Both pistons 9 and 10 move and the rolling angle will soon increase from 0° to 3.5°. However, as soon as the accumulator 20 has been entirely filled with oil, the upward motion of the piston 10 in the right cylinder 8 and the downward motion of the piston 9 in the left cylinder is stopped. As the centrifugal force N increases in a bend, or in general when the vehicle 2 starts to roll more, the pressure in the pipe 18 will be raised and this pressure will increase on the lower surface A' of the piston 9 in the left cylinder 7. The piston 10 in the right cylinder 8 will move further up, but also the piston 9 in the left cylinder 7 will move up then. Consequently, both pistons 9 and 10 with the connected bridge arms 3 will shift upward in relation to the frame 31, as a result of which the vehicle 2 is subjected to spring sag and as a result of which the rolling angle will only further increase to a limited extent. The further increase of the rolling angle is explained by the fact that the relative motion in the left cylinder 7 is smaller than that in the right cylinder 8, and so this is due to the fact that the surface A' is larger at the bottom of the left piston 9 than the surface A at the top of the right piston 10.

By selecting the appropriate work surfaces A and A' and an appropriate oil capacity for the accumulators 19 and 20, the total rolling angle can thus be restricted to for example 4° at the most.

The fact that this leads to more rolling stability for the vehicle 2 is obvious, if one knows that for vehicles with rigid axles and without any rolling stabilisation system, the total rolling angle may be about 10°.

An additional advantage of the present invention is that, thanks to the relative movement of the cylinders 7 and 8 on both sides of the vehicle 2, the centre of gravity G is lowered. This fact also contributes to a large extent to the stability of the vehicle 2.

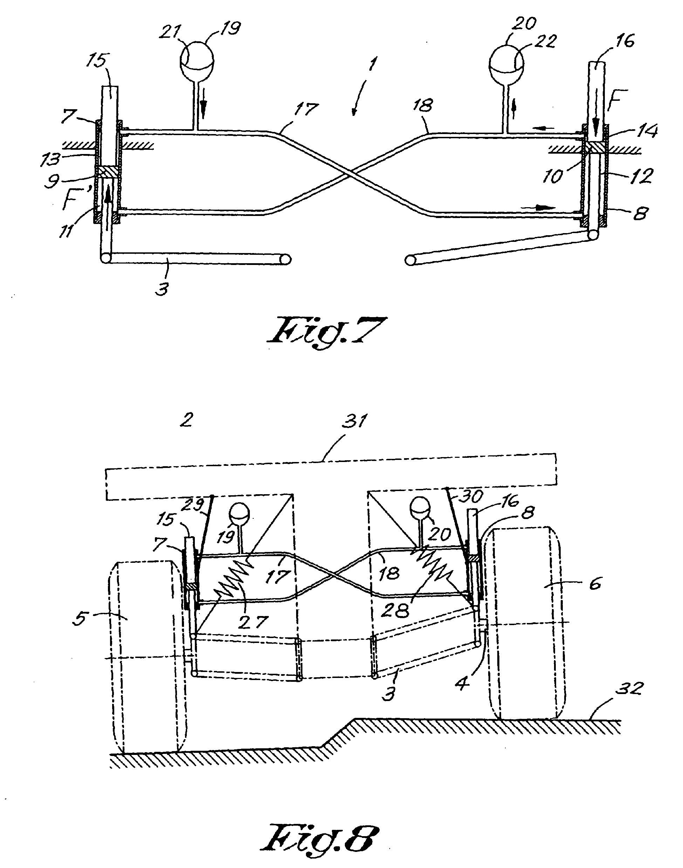

Figure 7 shows the working of the device 1 when the vehicle 2 is standing on a rough road surface 24, as represented in figure 8. The right side of the vehicle 2 is compressed, while the left side remains in the neutral position.

The oil that has been moved by the right cylinder 8 will be integrally absorbed by the accumulator 20 as the piston 9 in the left cylinder 7 does not move. The lower chamber 12 of the right cylinder 8 draws in the oil that is stored by the accumulator 19. The oil capacity in the accumulators 19 and 20 is preferably equal to the movement of the pistons in case of a compression or outward spring of at least 75% of the maximum values, in other words three quarters of the stroke volume of the cylinders 7 and 8.

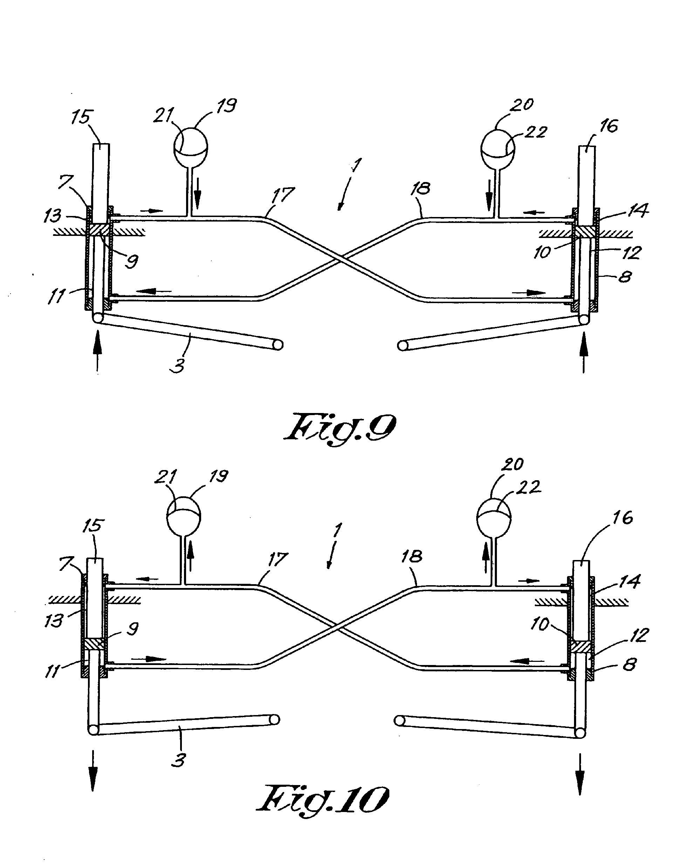

When both wheels 5 and 6 of the vehicle 2 compress, the oil in the system will be pressed from the upper chambers 13 and 14 of the cylinders 7, 8 respectively to the lower chambers 12, 11 respectively, as is shown in figure 9. As less oil is moved in the upper chambers 13 and 14 than in the lower chambers 11 and 12, the accumulators 19 and 20 will compensate for the oil difference by rendering the difference.

When both wheels 5 and 6 spring outwards, as shown in figure 10, the oil will be pressed from the lower chambers 11 and 12 to the upper chambers 14, 12 respectively. There is less volume available in the upper chambers 13 and 14 than in the lower chambers 11 and 12. The membranes 21 and 22 are pushed up by the oil and the oil accumulators 19 and 20 collect the excess oil.

A vital characteristic of the device 1 is that no external control whatsoever is required to guide the oil stream to the desired cylinder chambers 11-14 and accumulators 19 and 20. The system is activated, i.e. the pistons 9 and 10 shift as soon as there is a lateral imbalance in the vehicle 2. This imbalance may be the result of the centrifugal forces that are created in bends, but also when the vehicle is situated on a rough road surface 32 and thus might turn over.

In what precedes is described how the cylinders 7 and 8 are connected to the frame 31 of the vehicle 2 by means of rods 29 and 30, but it is clear that the invention does not exclude that the cylinders 7 and 8 are coupled directly or in another way, for example by means of a shear mechanism, to the above-mentioned frame 31.

In the preceding description, by bottom of the device 1 is meant the side which is fixed to the bridge 3 of the vehicle 2.

The invention is by no means restricted to the embodiments described above and represented in the drawings; on the contrary, such a device to improve the rolling stability of a vehicle can be made in different shapes and dimensions while still remaining within the scope of the invention.

## Claims

1. Device to improve the rolling stability of a vehicle (2) with a frame (31) that is supported by at least one axle (4) with wheels (5,6) that are bearing-mounted to a bridge (3) which is arranged in a springy manner in relation to the frame (31), **characterised in that** the device (1) mainly consists of two double-action hydraulic cylinders (7, 8), provided between the frame (31) and the above-mentioned bridge (3), and which are each provided with a piston (9, 10) which divides the cylinder in an upper chamber (13, 14) and a lower chamber (11, 12) and with a piston rod (15, 16) whose diameter (D) in the upper chamber (13, 14) is larger than the diameter (d) in the lower chamber (11, 12), whereby a tube (17) is provided on the one hand which connects the upper chamber (13) of the first cylinder (7) to the lower chamber (12) of the second cylinder (8) and whereby a tube (18) is provided on the one hand which connects the upper chamber (14) of the second cylinder (8) to the lower chamber (11) of the first cylinder (7) and wherein the device is such that when both wheels (5,6) of the vehicle (2) compress, a viscous fluid in the device is pressed from the upper chambers (13, 14) of the cilinders (7,8) respectively to the lower chambers (12,11) respectively and wherein the device is such that when both wheels (5,6) of the vehicle (2) spring outwards, a viscous fluid in the device is pressed from the lower chambers (11,12) of the cilinders (7,8) respectively to the upper chambers (14,13) respectively.

2. Device according to claim 1, **characterised in that** accumulators (19, 20) are connected to the above-mentioned tubes (17, 18).

3. Device according to claim 1, **characterised in that** the volume of oil or another fluid of the accumulators (19, 20) is preferably equal to three quarters of the stroke volume of the cylinders (7,8).

4. Device according to any one of the preceding claims, **characterised in that** the piston rods (15, 16) are directly connected to the bridge (3) of the vehicle (2) and the cylinders (7, 8) are connected to the frame (31) by means of rods (29, 30).

5. Device according to any one of the preceding claims, **characterised in that** the piston rods (15, 16) are directly connected to the bridge (3) of the vehicle (2) at the lower end with a small diameter (d) and are free at the top end with a large diameter (D) as the top end is not connected to anything at all.

6. Device according to any one of the preceding claims, **characterised in that** the wheels (5, 6) of the above-mentioned axle (4) are spring-mounted independently from one another by means of a spring system (27, 28).

7. Device according to any one of the preceding claims, **characterised in that** the wheels (5, 6) of the above-mentioned axle (4) are spring-mounted by means of an air or spiral suspension or a hydraulic or electromagnetic suspension (27, 28).

8. Device according to any one of the preceding claims, **characterised in that** the difference in diameter (d, D) of the piston rods (15, 16) in the lower (11, 12) and upper (13, 14) chambers respectively of the above-mentioned cylinders (7, 8) and the volumes of the accumulators (19, 20) actually restrict the maximum rolling angle of the vehicle (2) to 4°.

## Patentansprüche

1. Vorrichtung zur Verbesserung der Rollstabilität eines Fahrzeugs (2) mit einem Chassis (31), das durch mindestens eine Achse (4) mit Rädern (5, 6) getragen wird, die auf einem Verbindungselement (3) gelagert sind, das in Bezug auf das Chassis (31) federnd angeordnet ist, **dadurch gekennzeichnet, dass** die Vorrichtung (1) im Wesentlichen aus zwei doppeltwirkenden Hydraulikzylindern (7, 8) besteht, die zwischen dem Chassis (31) und dem vorgenannten Verbindungselement (3) angeordnet sind und die jeder mit einem Kolben (9, 10), der den Zylinder in eine obere Kammer (13, 14) und eine untere Kammer (11, 12) unterteilt, und mit einer Kolbenstange (15, 16), deren Durchmesser (D) in der oberen Kammer (13, 14) größer als der Durchmesser (d) in der unteren Kammer (11, 12) ist, versehen ist, wobei einerseits eine Leitung (17) vorgesehen ist, welche die obere Kammer (13) des ersten Zylinders (7) mit der unteren Kammer (12) des zweiten Zylinders (8) verbindet, und wobei andererseits eine Leitung (18) vorgesehen ist, welche die obere Kammer (14) des zweiten Zylinders (8) mit der unteren Kammer (11) des ersten Zylinders (7) verbindet, und wobei die Vorrichtung derart ist, dass, wenn beide Räder (5, 6) des Fahrzeugs (2) sich eindrücken, ein viskoses Fluid in der Vorrichtung jeweils von den oberen Kammern (13, 14) der Zylinder (7, 8) jeweils zu den unteren Kammern (12,11) gepresst wird, und wobei die Vorrichtung derart ist, dass, wenn beide Räder (5, 6) des Fahrzeugs (2) ausfedern, ein viskoses Fluid in der Vorrichtung jeweils von den unteren Kammern (11, 12) der Zylinder (7, 8) jeweils zu den oberen Kammern (14, 13) gepresst wird.

2. Vorrichtung nach Anspruch 1, **dadurch gekennzeichnet, dass** Akkumulatoren (19, 20) mit den vorgenannten Leitungen (17, 18) verbunden sind.

3. Vorrichtung nach Anspruch 1, **dadurch gekennzeichnet, dass** das Volumen von Öl oder einem anderem Fluid der Akkumulatoren (19, 20) bevorzugt gleich drei Vierteln des Hubvolumens der Zylinder (7, 8) ist.

4. Vorrichtung nach einem der vorgenannten Ansprüche, **dadurch gekennzeichnet, dass** die Kolbenstangen (15, 16) direkt mit dem Verbindungselement (3) des Fahrzeugs (2) verbunden sind und die Zylinder (7, 8) mittels Stangen (29, 30) mit dem Chassis (31) verbunden sind.

5. Vorrichtung nach einem der vorgenannten Ansprüche, **dadurch gekennzeichnet, dass** die Kolbenstangen (15, 16) an dem unteren Ende mit einem kleinen Durchmesser (d) direkt mit dem Verbindungselement (3) des Fahrzeugs (2) verbunden sind und an dem oberen Ende mit einem großen Durchmesser (D) frei sind, da das obere Ende mit nichts verbunden ist.

6. Vorrichtung nach einem der vorgenannten Ansprüche, **dadurch gekennzeichnet, dass** die Räder (5, 6) der vorgenannten Achse (4) mittels eines Federsystems (27, 28) unabhängig voneinander abgefedert sind.

7. Vorrichtung nach einem der vorgenannten Ansprüche, **dadurch gekennzeichnet, dass** die Räder (5, 6) der vorgenannten Achse (4) mittels einer Luftoder Spiralaufhängung oder einer hydraulischen oder elektromagnetischen Aufhängung (27, 28) abgefedert sind.

8. Vorrichtung nach einem der vorgenannten Ansprüche, **dadurch gekennzeichnet, dass** der Unterschied im Durchmesser (d, D) der Kolbenstangen (15, 16) in der unteren (11, 12) beziehungsweise oberen (13, 14) Kammer der vorgenannten Zylinder (7, 8) und den Volumina der Akkumulatoren (19, 20) den maximalen Rollwinkel des Fahrzeugs (2) effektiv auf 4° beschränken.

**Revendications**

1. Dispositif pour améliorer la stabilité en roulis d'un véhicule (2) comprenant un cadre (31) qui est supporté par au moins un essieu (4) comprenant des roues (5, 6) qui sont montées par le biais de paliers sur un pont (3) qui est disposé de manière élastique par rapport au cadre (31), **caractérisé en ce que** le dispositif (1) est constitué principalement par deux cylindres hydrauliques à double action (7, 8) prévus entre le cadre (31) et le pont (3) susmentionné, et qui sont munis chacun d'un piston (9, 10) qui subdivise le cylindre en une chambre supérieure (13, 14) et une chambre inférieure (11, 12) et d'une tige de piston (15, 16) dont le diamètre (D) dans la chambre supérieure (13, 14) est supérieur au diamètre (d) dans la chambre inférieure (11, 12), un tube (17) étant prévu d'une part qui relie la chambre supérieure (13) du premier cylindre (7) à la chambre inférieure (12) du deuxième cylindre (8) et un tube (18) étant prévu d'autre part qui relie la chambre supérieure (14) du deuxième cylindre (8) à la chambre inférieure (11) du premier cylindre (7), et le dispositif étant tel que lorsque les deux roues (5, 6) du véhicule (2) se compriment, un fluide visqueux dans le dispositif passe par compression des chambres supérieures (13, 14) des cylindres (7, 8) respectivement aux chambres inférieures (12, 11) respectivement et le dispositif étant tel que lorsque les deux roues (5, 6) du véhicule (2) font ressort vers l'extérieur, un fluide visqueux dans le dispositif passe par compression des chambres inférieures (11, 12) des cylindres (7, 8) respectivement aux chambres supérieures (14, 13) respectivement.

2. Dispositif selon la revendication 1, **caractérisé en ce que** des accumulateurs (19, 20) sont reliés aux tubes susmentionnés (17, 18).

3. Dispositif selon la revendication 1, **caractérisé en ce que** le volume d'huile ou d'un autre fluide des accumulateurs (19, 20) est de préférence égal aux trois quarts du volume de la course des cylindres (7, 8).

4. Dispositif selon l'une quelconque des revendications précédentes, **caractérisé en ce que** les tiges de pistons (15, 16) sont directement reliées au pont (3) du véhicule (2) et les cylindres (7, 8) sont reliés au cadre (31) au moyen de tiges (29, 30).

5. Dispositif selon l'une quelconque des revendications précédentes, **caractérisé en ce que** les tiges de pistons (15, 16) sont directement reliées au pont (3) du véhicule (2) à l'extrémité inférieure possédant un petit diamètre (d) et sont libres à l'extrémité supérieure possédant un grand diamètre (D), étant donné que l'extrémité supérieure n'est reliée à rien du tout.

6. Dispositif selon l'une quelconque des revendications précédentes, **caractérisé en ce que** les roues (5, 6) de l'essieu (4) susmentionné sont montées sur ressorts indépendamment l'une de l'autre au moyen d'un système de ressorts (27, 28).

7. Dispositif selon l'une quelconque des revendications précédentes, **caractérisé en ce que** les roues (5, 6) de l'essieu (4) susmentionné sont montées sur ressorts au moyen d'une suspension pneumatique ou à spirale ou bien au moyen d'une suspension hydraulique ou électromagnétique (27, 28).

8. Dispositif selon l'une quelconque des revendications précédentes, **caractérisé en ce que** la différence des diamètres (d, D) des tiges de pistons (15, 16) dans les chambres inférieures (11, 12) et supérieures (13, 14) respectivement des cylindres susmentionnés (7, 8) et les volumes des accumulateurs (19, 20) restreignent en réalité l'angle de roulis maximal du véhicule (2) à 4°.

**Fig.1**

**Fig.2**

*Fig.3*

*Fig.4*

*Fig.5*

*Fig.6*

*Fig.7*

*Fig.8*

*Fig.9*

*Fig.10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1256864 A
- GB 2056383 A
- DE 4115717 A